# EUROPEAN PATENT APPLICATION

(11) **EP 3 415 771 A1**
(43) Date of publication of application: **19.12.2018**
(21) Application number: 18181957.4
(22) Date of filing: 09.01.2015
(51) Int. Cl.: F16B 5/06, E06B 9/13, E06B 9/58, E04H 15/64

(54) **FASTENING DEVICE FOR SECTIONS OF A SHEET-LIKE MATERIAL**

(62) Divisional of application: 15150671.4
(71) Applicant: Gloukhov, Vladislav, Moscow 141400 (RU)
(72) Inventor: GLOUKHOV, Vladislav, 141400 Moscow (RU); MIKHAYLOV, Alexey, 101000 Moscow (RU)
(74) Representative: Maikowski & Ninnemann Patentanwälte Partnerschaft mbB

(57) **Abstract**

A fastening device (1) for sections of a sheet-like material (2, 2') is presented. The fastening device comprises a plurality of holding elements (10, 10'), wherein at least one holding element (10, 10') has a fastening portion (100, 100') configured to be fastened on at least one edge portion (21, 21') of at least one section of a sheet-like material (2, 2') and a guide portion (102, 102') which is connected to said fastening portion (100, 100'). A flexible connecting element (11) is configured to extend along said at least one edge portion (21, 21') and to be connected to the guide portion (102, 102') of said at least one holding element (10, 10') in a form-fitting and/or force-locking manner.

## Description

This specification refers to embodiments of a fastening device for sections of a sheet-like material.

In various applications such as sun shades, blinds, shutters, tents, or membrane construction, it is necessary to fasten sections of a sheet-like material to each other or to external holding structures.

This can be achieved by creating permanent connections, for example in form of a seam or weldseam. In some applications, eyelets are provided on the edge of the sheet-like material as a means for creating connections with other sections of a sheet-like material or with external structures.

The DE 100 51 451 A1 discloses a system for fastening the edges of sheet material comprising a U-profile, into which the edge is fitted. The edge is glued over a reinforcing strip and bent back over the sheet before it is inserted into the profile.

Another common solution for connecting a sheet-like material section to an external structure is to provide a piping on the edge of section of a sheet-like material, which is configured to be inserted and held (potentially slidably) in a guiding rail.

The WO 03/106 805 A1 describes a shutter comprising a flexible sheet and a guide channel, wherein the flexible sheet is movably installed on the guide channel via guide chains that are provided on either lateral edge of the flexible sheet. Each guide chain comprises a plurality of guide members, wherein each guide member is composed of a body portion and protrusions, which are joined to the flexible sheet. Further, each guide member has a connection hole for connecting the body portions to each other via a bendable elastic member that is inserted into the connections holes.

The EP 2 503 183 A1 discloses a connector assembly for connecting strap ends with two strip-shaped connector elements, each connector element having at a first longitudinal side an attachment portion for attachment to a strap end, and along a second longitudinal side a connecting portion with a connecting profile, which matingly engages in a corresponding connection profile of the other connector element.

Said known fastening devices generally allow either for fastening sections of a sheet-like material to each other, or for fastening such sections to special external holding devices. However, for reasons of flexibility, it is desirable to be able to use the same device for both purposes, depending on the task at hand.

Preferably, such a fastening device would be applicable to not only one type of material, but to a wide spectrum of a sheet-like materials, including, in particular robust materials like metal mesh.

Sometimes it is required to fasten non-linear, i.e. curved, edges of a sheet-like material. Further, in the case of flexible material sections that can be rolled up for transport or storage or as a functional feature, e.g. in shutters, it is desirable that the fastening devices attached to these section do not hinder this ability. This poses another requirement to the (also literal) flexibility of a fastening device.

It is an object to provide a device that allows for a robust and flexible fastening of sections of a sheet-like material to each other or to external holding structures.

According to an embodiment, a fastening device for sections of a sheet-like material is presented. The fastening device comprises a plurality of holding elements, wherein at least one holding element has a fastening portion configured to be fastened on at least one edge portion of at least one section of a sheet-like material and a guide portion which is connected to said fastening portion. A flexible connecting element is configured to extend along the at least one edge portion and to be connected to the guide portion of said at least one holding element in a form-fitting and/or force-locking manner.

In a variant, each of the plurality of holding elements has said fastening portion and said guide portion and said flexible connecting element is configured to connect the plurality of holding elements with each other.

The use of a plurality of holding elements which are individually attached to the edge of a sheet-like material bears the advantage that the fastening device according to the invention is not limited to linear edges, but can flexibly adapt also to curved ones. Furthermore, by connecting the holding elements via a flexible connecting element, the whole structure gains stability, while still allowing for, e.g., rolling up the sheet-like section together with the fixing device in case of a flexible material.

In an embodiment, said guide portion of the holding element exhibits a loop and said flexible connecting element is configured to be connected to the guide portion by engaging through said loop.

In another embodiment, said fastening portion of the holding element is configured to be fastened on said at least one edge portion in a form-fitting and/or force-locking manner.

In particular, according to an embodiment, the fastening portion of each holding element comprises a first tab and a second tab, which are configured to be fastened on a first and second side of an edge portion of said section of a sheet-like material, respectively, so as to enclose said edge portion from at least two sides. This allows for a strong and reliable connection between the holding elements and the sheet-like material and ensures a symmetrical strain.

The guide portions of the plurality of holding elements together with said flexible connecting element are configured to be inserted into a guiding chamber of a guiding rail. This is advantageous if the sheet-like material needs to be attached to an external structure and, in particular, if a sliding functionality is required, such as in shutters, moveable sun shades, and the like.

For connecting a first edge portion to a second edge portion of sections of a sheet-like material, the guide portions of first holding elements (provided to be fastened to said first edge portion) and the guide portions of second holding elements (provided to be fastened to said second edge portion) are configured to be arranged adjacent to one another in a zip-like manner and to be connected with each other via said flexible connecting element engaging through said loops and extending along the edge portions.

The plurality of holding elements can be made of metal, in particular sheet metal, which can be processed with relative ease and provides a robust fixing device.

In an embodiment, the flexible connecting element comprises at least one plastic belt. The connecting element can also comprise at least one steel cable. In a preferred embodiment, the connecting element can comprise both at least one plastic belt and at least one steel cable, wherein the at least one steel cable is embedded in the at least one plastic belt for its reinforcement.

In an advantageous embodiment, the fastening device is used for fastening sections of a sheet-like material in a shutter device, a sun shade, a blind, a tent, or a membrane construction.

Those skilled in the art will recognize additional features and advantages upon reading the following detailed description, and upon viewing the accompanying drawings.

The parts in the figures are not necessarily to scale, instead emphasis being placed upon illustrating principles of the invention. Moreover, in the figures, like reference numerals designate corresponding parts. In the drawings:
- Fig. 1: illustrates a fastening device for a section of a sheet-like material according to one or more embodiments;
- Fig. 2: illustrates a lateral cross section of a fastening device as shown in Fig. 1;
- Fig. 3: illustrates a lateral cross section of an edge portion of a sheet-like material being slidably arranged in a guiding rail with a fastening device according to one or more embodiments;
- Fig. 4: illustrates two sections of a sheet-like material attached to each other with a fastening device according to one or more embodiments;
- Fig. 5: illustrates a rod comprising a plurality of integrally connected holding elements as used in a method for fastening sections of a sheet-like material.

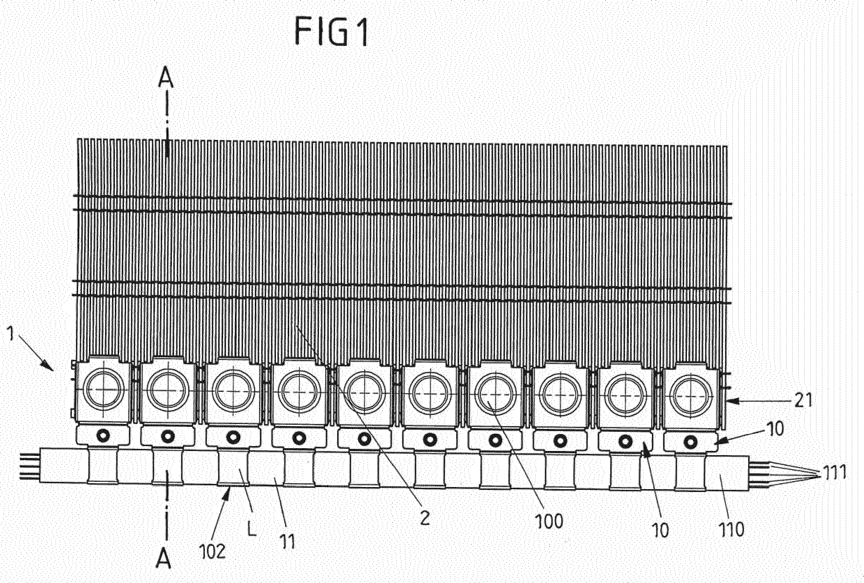

Fig. 1 illustrates an exemplary embodiment of a fastening device 1 for a section of a sheet-like material 2. In a preferable embodiment, the sheet-like material 2 can comprise a metal mesh. Alternatively, the sheet-like material can comprise, for example, textiles, PVC, Kevlar, ETFE, carbon fiber, aluminum, metal mesh, or carbon fiber. In particular, the sheet-like material 2 can be a flexible material. Such sections of sheet-like material can be parts of, for example, sun shades, blinds, shutters, tents or membrane construction.

In the embodiment of Fig. 1, a plurality of holding elements 10 are attached adjacent to one another to an edge portion 21 of said section of a sheet-like material 2. For instance, holding elements 10 can be made of metal, in particular sheet metal, which can be processed with ease and provides a robust device. The use of a plurality of holding elements 10 which are individually attached to the edge portion 21 of a sheet-like material sections 2 bears the advantage that the application of the fastening device 1 is not limited to linear edges 21, but can flexibly adapt also to curved ones.

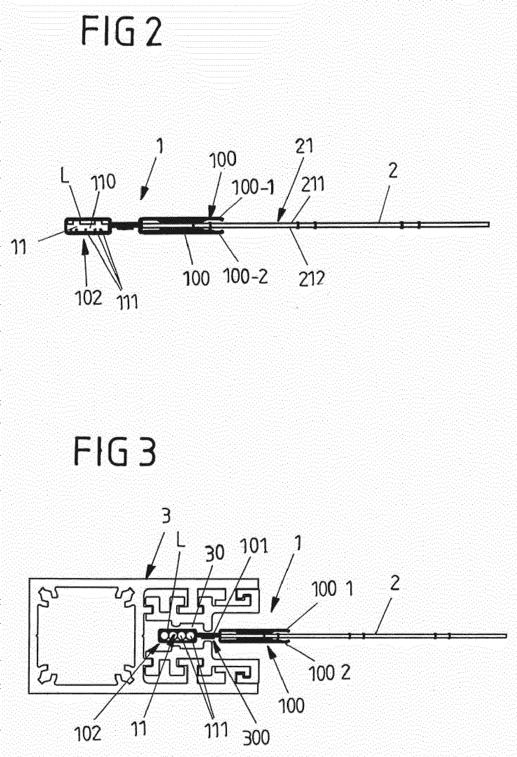

Each holding element 10 is fastened on said edge portion 21 with a fastening portion 100 and projects beyond the edge portion 21 with a guide portion 102, which is connected to the fastening portion 100. Each guide portion 102 exhibits a loop L, as best can be seen in the cross section view along the line A-A of a fastening device illustrated in Fig. 2.

A flexible connecting element 11 extending along said edge portion 21 engages through the loops L of the guide portions 102 of said plurality of holding elements 10 for connecting the plurality of holding elements 10. By connecting the holding elements 10 with a flexible connecting element 11, the whole structure gains stability, while still allowing for, e.g., rolling up the sheet-like section in case of a flexible material.

Thus, a method for fastening sections of a sheet-like material 2 with the fastening device 1 depicted in Fig. 1 comprises the steps of providing the plurality of holding elements 10, fastening the fastening portions 100 of the holding elements 10 on an edge portion 21 of at least one section of a sheet-like material 2, and passing the flexible connecting element 11 through said loops L of said guide portions 102 of the plurality of holding elements 10 along the edge portion 21.

In an advantageous embodiment, in which the edge portion 21 of the section of a sheet-like material 2 comprises metal, in particular metal mesh, and in which at least the fastening portions 100 of the holding elements 10 are made of metal, in particular sheet metal, the fastening of the fastening portions 100 of said holding elements 10 on said edge portion 21 can be carried out by resistance spot welding in order to achieve a reliable connection.

The flexible connecting element 11 can, for instance, comprise a plastic belt 110. In the exemplary embodiment illustrated in Fig. 1, a plurality of steel cables 111 are embedded in the plastic belt 110 for its reinforcement. Alternatively, the flexible connecting element 11 can, for instance, consist of one or several steel cables 111 only. This is illustrated in the exemplary embodiment of Fig. 3, where the connecting element comprises four steel cables 111 (shown in a cross section).

Fig. 2 illustrates a cross section of a fastening device as shown in Fig. 1 along the indicated line A-A. In this exemplary embodiment, the fastening portion 100 of each holding element 10 comprises a first tab 100-1 and a second tab 100-2, which are configured to be fastened on a first side 211 and on a second side 212 of an edge portion 21 of said section of a sheet-like material 2, respectively, so as to enclose said edge portion 21 from two sides 211, 212. This allows for a strong and reliable connection between the holding elements and the sheet-like material. In particular, the attachment of the first and second tabs 100-1, 100-2 on both sides of the section of sheet-like material 2 induces a symmetrical strain on the edge portion 21.

Fig. 3 illustrates a lateral cross section of an edge portion 21 of a sheet-like material section 2 which is arranged in a guiding rail 3 with a fastening device 1 according to the invention. The sheet-like material section 2 can, for example, be a part of a sun shade, and the guiding rail 3 can belong to a side channel of the sun shade attached to a wall. In the exemplary embodiment of Fig. 3, the guide portions 102 of the plurality of holding elements 10 together with the flexible connecting element 11 are slidably arranged in the guiding chamber 30 of the guiding rail 3 so as to allow for a sliding movement in a first direction parallel to the guiding rail 3. By contrast, movement of the guide portions 102 in direction different from said first direction is hindered due to the loop L of each guide portion 102 being larger than a slit 300 of the guiding chamber 30, wherein a slim bridge portion 101 of each guide portion 102 connecting the loop L to the fastening portion 100 projects through the slit 300. Thus, the guide portions 102 together with said flexible connecting element 11 can be inserted into the guiding chamber 30 of a guiding rail 3 in the first direction.

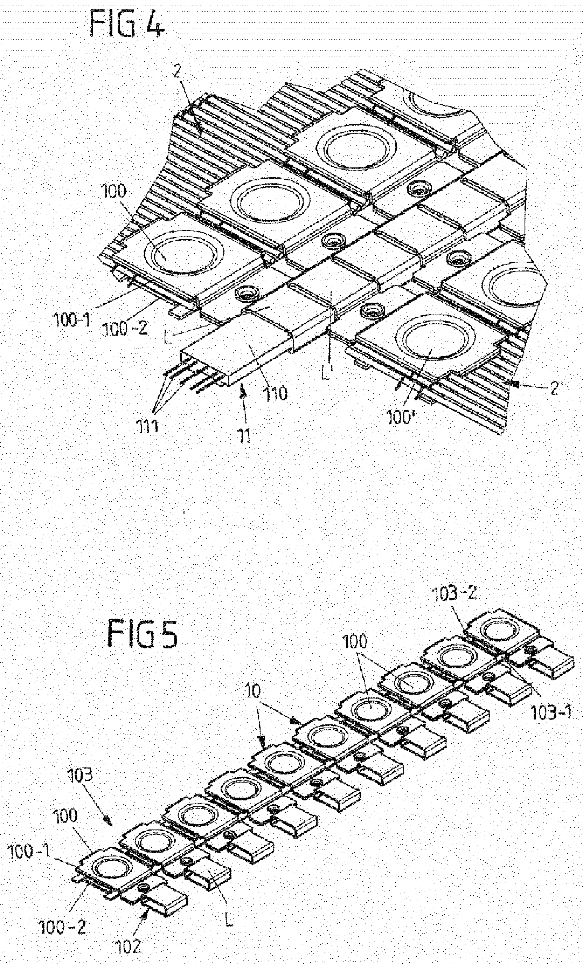

Fig. 4 illustrates two sections of a sheet-like material attached to each other using a fastening device 1 according to the invention. For connecting a first edge portion 21 to a second edge portion 21' of sections of sheet-like materials 2, 2', first guide portions 102 of first holding elements 10, which are fastened with their fastening portions 100 to said first edge portion 21, and second guide portions 102' of second holding elements 10', which are fastened with their fastening portions 100' to said second edge portion 21, are arranged adjacent to one another in a zip-like manner, wherein the fastening portions 100, 100' of adjacent first and second holding elements 10, 10' are oriented in opposite directions. The first and second guide portions 102, 102' are connected with each other via a flexible connecting element 11 engaging through said loops L, L' and extending along the edge portions 21, 21'.

In the exemplary embodiment shown in Fig. 4, the width of the loops L, L' is roughly half of the width of the fastening portions 100, 100' so as to allow, within the zip-like arrangement, for a dense alignment of the fastening portions 100, 100' on the respective edge portions 21, 21' of the sections of sheet-like material 2, 2' and, at the same time, of the loops L, L' of the guide portions 101, 101' on the flexible connecting element 11.

Correspondingly, in a method for fastening a first edge portion 21 of a first section of a sheet-like material 2 at a second edge portion 21' of a second section of a sheet-like material 2' with a fastening device as shown in Fig. 4, first, the fastening portions 100 of first holding elements 10 are fastened on the first edge portion 21 and the fastening portions 100' of second holding elements 10' are fastened on the second edge portion 21'. Then, the first guide portions 102 of said first holding elements 10 and the second guide portions 102' of said second holding elements 10' are arranged adjacent to one another in a zip-like manner. Finally, the flexible connecting element 11 is passed through the loops L, L' of the first guide portions 102 and second guiding portions 102' to connect said first holding elements 10 and said second holding elements 10'.

For fastening sections of a sheet-like material 2, 2' using a fastening device 1 according to one or more embodiments described above, it may be advantageous to provide said holding elements 10, 10' in the form of a rod 103 comprising a plurality of integrally connected holding elements 10, 10'. In particular, for ease of storage and transport, the rod 103 can be flexible so as to be arranged as a reel. If the holding devices are made of sheet metal, this form may arise naturally from the production. This form of providing the holding elements 10 can also facilitate the handling of the holding elements 10 and their alignment with an edge portion 21, 21' of a sheet-like material section 2, 2'.

Fig. 5 illustrates a rod 103 consisting of a plurality of integrally connected holding elements 10. The fastening portions 100 of adjacent holding elements 10 are connected via first 103-1 and second 103-2 lateral connection bridges. The lateral connection bridges 103-1, 103-2 can, for example, consists of a thin piece of sheet metal which can be easily cut. Thus, it is easily possible to obtain a rod of the appropriate length (adapted to the length of an edge portion 21) from a reel of integrally connected holding elements 10. For an easy handling of the rod 103 and levelling with the edge portion 21, 21' before the fastening step, it can be advantageous to pass, for example, one or more steel cables as a provisional connecting element through the loops L of the guide elements 102, 102'.

Preferably, the individual holding elements 10, 10' are separated from each other, for example by cutting the lateral connection bridges 103-1, 103-2, at least after fastening the fastening sections 100, 100' on an edge portion 21, 21'. This ensures the full flexibility of the edge portion, for instance, for rolling up flexible material sections 2, 2' for transport or storage or as a functional feature, e.g. in shutters.

In a variant method suitable, in particular, for metal mesh as the sheet-like material 2, the second lateral connection bridges 103-2, which are situated further away from the guide portions 102 than the first lateral connection bridges 103-1, are cut before fastening the fastening portions 100 on an edge portion 21. The fastening of the fastening portions 100 on the edge portion 21 may, for example, be achieved by resistance spot welding. Then the provisional connecting element (if used) is removed and the first lateral connection bridges 103-1 are cut in order to ensure a good flexibility of the edge portion 21.

### List of reference signs

- 1: Fastening device
- 10, 10': Holding elements
- 100, 100': Fastening portion
- 100-1: First tab
- 100-2: Second tab
- 102, 102': Guide portion
- 103: Rod
- 103-1: First lateral connection bridge
- 103-2: Second lateral connection bridge
- 11: Connecting element
- 110: Plastic belt
- 111: Steel cable

- 2, 2': Section of a sheet-like material
- 21, 21': Edge portion
- 211, 211': First side
- 212, 212': Second side

- 3: Guiding rail
- 30: Guiding chamber
- 300: Slit

- 4: Method
- 40: Providing of holding elements
- 41: Fastening of fastening portions
- 42: Passing connecting elements through loops

- L, L': Loop

## Claims

1. A fastening device (1) for sections of a sheet-like material (2, 2'), comprising a plurality of holding elements (10, 10'), wherein at least one holding element (10, 10') has
- a fastening portion (100, 100') configured to be fastened on at least one edge portion (21, 21') of at least one section of a sheet-like material (2, 2') and
- a guide portion (102, 102') which is connected to said fastening portion (100, 100')
and wherein a flexible connecting element (11) is configured to extend along said at least one edge portion (21, 21') and to be connected to the guide portion (102, 102') of said at least one holding element (10, 10') in a form-fitting and/or force-locking manner,
**characterized in that**
said guide portions (102, 102') of said plurality of holding elements (10, 10') together with said flexible connecting element (11) are configured to be inserted into a guiding chamber (30) of a guiding rail (3); and that
for connecting a first edge portion (21) to a second edge portion (21') of sections of sheet-like materials (2, 2'), the guide portions (102) of first holding elements (10) provided to be fastened to said first edge portion (21) and the guide portions (102') of second holding elements (10') provided to be fastened to said second edge portion (21) are configured to be arranged adjacent to one another in a zip-like manner and to be connected via said flexible connecting element (11) engaging through loops (L, L') of said guide portions (102, 102') and extending along the edge portions (21, 21').

2. The fastening device (1) of claim 1, **characterized in that** each of the plurality of holding elements (10, 10') has said fastening portion (100, 100') and said guide portion (102, 102') and that said flexible connecting element (11) is configured to connect the plurality of holding elements (10, 10') with each other.

3. The fastening device (1) of claim 1 or claim 2, **characterized in that** said guide portion (102, 102') exhibits a loop (L, L') and that said flexible connecting element (11) is configured to be connected to the guide portion (102, 102') by engaging through said loop (L, L').

4. The fastening device (1) of one of the claims 1 to 3, **characterized in that** said fastening portion (100) is configured to be fastened on said at least one edge portion (21, 21') in a form-fitting and/or force-locking manner.

5. The fastening device (1) of one of the preceding claims, **characterized in that** said fastening portion (100) comprises a first tab (100-1) and a second tab (100-2), which are configured to be fastened on a first (211, 211') and second (212, 212') side of said at least one edge portion (21, 21'), respectively, so as to enclose the edge portion (21, 21') from at least two sides.

6. The fastening device (1) of one of the preceding claims, **characterized in that** said plurality of holding elements (10) are made of metal, particularly sheet metal.

7. The fastening device (1) of one of the preceding claims, **characterized in that** said connecting element (11) comprises at least one plastic belt (110).

8. The fastening device (1) of one of the preceding claims, **characterized in that** said connecting element (11) comprises at least one steel cable (111).

9. The fastening device (1) of claim 7 and claim 8, **characterized in that** the at least one steel cable (111) is embedded in the at least one plastic belt (110).

10. Use of the fastening device (1) of any one of claims 1 to 9 for fastening sections of a sheet-like material (2, 2') in a shutter device, a sun shade, a blind, a tent, or a membrane construction.
